# EUROPÄISCHE PATENTSCHRIFT

(11) **EP 3 170 603 B1**
(45) Veröffentlichungstag und Bekanntmachung des Hinweises auf die Patenterteilung: **13.02.2019**
(21) Anmeldenummer: 16201745.3
(22) Anmeldetag: 14.12.2010
(51) Int. Cl.: B23K 7/00, B23K 7/10, B23K 9/013, B23K 10/00, B23K 15/08, B23K 26/02, B23K 26/38, B23K 26/08, B23K 26/14, B23K 26/04, B23Q 1/54, B24C 1/04, B25J 17/02, B26F 3/00

(54) **TRENNVORRICHTUNG ZUM TRENNEN EINER MATERIALSCHICHT MITTELS EINES SCHNEIDESTRAHLS UNTER VERWENDUNG EINES SCHNEIDKOPFES MIT EINEM GELENK UND EINEM TASTER**
SEPARATING DEVICE FOR SEPARATING A MATERIAL LAYER BY MEANS OF A CUTTING JET USING AN ARTICULATED CUTTING HEAD WITH A TOUCH CONTACTOR
DISPOSITIF DE SÉPARATION D'UNE COUCHE DE MATÉRIAU AU MOYEN D'UN JET DE COUPE UTILISANT UNE TETE DE DECOUPE ARTICULEE ET UN CONTACTEUR

(30) Priorität: 17.12.2009 CH 19382009
(43) Veröffentlichungstag der Anmeldung: 24.05.2017
(62) Teilanmeldung aus: 10405235.2
(73) Patentinhaber: Microwaterjet AG, 4912 Aarwangen (CH)
(72) Erfinder: MAURER, Walter, 4665 Oftringen (CH); TRÖSCH, Beat, 4922 Thunstetten (CH)
(74) Vertreter: AMMANN PATENTANWÄLTE AG BERN

(56) Entgegenhaltungen:
- JP-A- 60 118 456
- JP-A- 63 016 865
- US-A- 2 766 982
- US-A- 3 203 683
- US-A1- 2004 048 548

## Beschreibung

Die vorliegende Erfindung bezieht sich auf eine Trennvorrichtung zum Trennen einer Materialschicht mittels eines Schneidstrahls.

Die Energie, welche der Schneidstrahl einer derartigen Trennvorrichtung erzeugt, wird dazu benutzt, eine Materialschicht entlang einer Kontur zu trennen. Als Schneidstrahl eignet sich beispielsweise ein Flüssigkeitsstrahl, der mit hoher Geschwindigkeit auf die Materialoberfläche trifft. Durchdringt der Flüssigkeitsstrahl das Material, so kommt es zu einem Energieverlust in Tiefenrichtung der Materialschicht, wodurch ein durch zwei Schnittkanten begrenzter Schnittspalt entsteht.

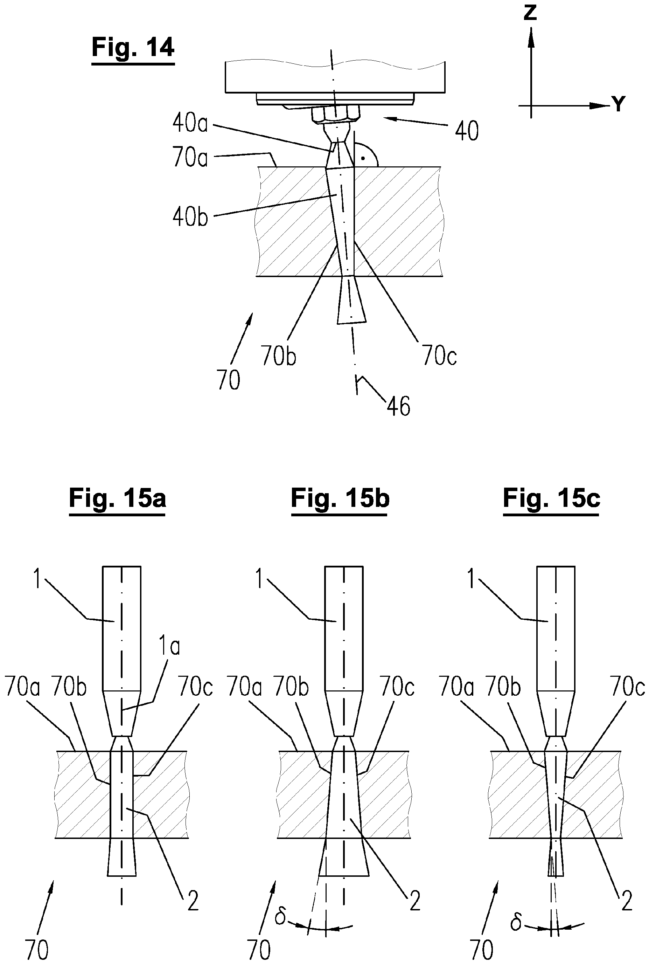

Ist die Richtung, in welcher sich der Schneidstrahl ausbreitet, - im Folgenden auch "Schneidkopfachse" genannt - senkrecht zur Oberfläche der Materialschicht ausgerichtet, so werden in der Regel die Schnittkanten nur bei einer bestimmten Vorschubgeschwindigkeit des Schneidkopfes parallel zueinander verlaufen. Diese Situation ist in Fig. 15a dargestellt, welche den Schneidkopf 1 mit Schneidkopfachse 1a, den Schneidstrahl 2 und ein Werkstück 70 mit der Oberfläche 70a und den Schnittkanten 70b, 70c zeigt.

Bei zu geringer Vorschubgeschwindigkeit wird der Schnittspalt an der Unterkante des Werkstückes 70 breiter (vgl. Fig. 15b), bei zu hoher Vorschubgeschwindigkeit schmäler (vgl. Fig. 15c). Die Schnittkanten 70b, 70c sind dann geneigt zueinander angeordnet und weisen gegenüber der Senkrechten auf der Werkstücksoberfläche 70a eine Neigung δ auf, wie dies aus Fig. 15b und 15c ersichtlich ist. Diese Neigung wird auch als Winkelfehler bzw. "taper" bezeichnet.

Ohne weitere Massnahmen muss die Vorschubgeschwindigkeit relativ gering gewählt werden, um den Winkelfehler vermeiden und somit Werkstücke mit zufriedenstellender Qualität schneiden zu können. Eine rationelle Bearbeitung ist dadurch erschwert.

Nebst Winkelfehlern können auch Formfehler auftreten: Wird die Richtung des Schneidkopfes geändert, um z. B. eine Ecke zu schneiden, so kann es aufgrund des Nachlaufes des Schneidstrahls (sogenannter "jet lag") zu Auswaschungen und somit zu Abweichungen von der gewünschten Form kommen.

Das Problem, Schnittkanten mit zufriedenstellender Qualität zu erzeugen, stellt sich nicht nur beim Schneiden mittels Flüssigkeitsstrahl wie reinem oder abrasiven Wasserstrahlschneiden, sondern auch bei anderen Trennarten mittels Schneidstrahl, z. B. Laserschneiden, Plasmaschneiden oder dergleichen.

Aus der EP 1 213 106 A2 ist es bekannt, den Schneidkopf geneigt zur Vertikalen an einer Dreheinrichtung anzubringen, die um die Vertikale drehbar ist. Diese Anordnung erlaubt es, den Schneidstrahl so zu drehen, dass beim Schneiden einer geraden Linie die unerwünschte Neigung δ wenigstens bei einer der beiden Schnittkanten ausgeglichen werden kann. Der Winkel, unter welchem der Schneidkopf an der Dreheinrichtung gehalten ist, lässt sich jedoch nicht gesteuert verändern. Mit einer derartigen Trennvorrichtung ist es daher u. a. schwierig, Ecken präzise zu schneiden.

Es sind auch fünfachsige Trennvorrichtungen bekannt, welche nebst den üblichen drei Achsen zum räumlichen Verschieben des Schneidkopfes zwei weitere Achsen aufweisen, um den Schneidkopf und somit den Schneidstrahl im Raum ausrichten zu können (siehe z. B. US 6,766,216 B2 und US 7, 074, 112 B2).

Aus der US 2004/0048548 A1 (Basis des Oberbegriffs des Anspruchs 1) ist eine Trennvorrichtung mit einem schwenkbaren Schneidkopf bekannt, der in Kugelgelenken gelagert ist. Es sind keine Mittel vorgesehen, um den Abstand zwischen dem Schneidkopf und der zu bearbeitenden Materialschicht zu erfassen. Dies erschwert eine genaue Bearbeitung.

Vorrichtungen anderer Art sind aus der US 2,766,982 (nichtschwenkbarer Schneidbrenner) und JP 63 016865 A (Drehvorrichtung zum Bewegen einer Werkzeugspitze auf einer Kreislinie) bekannt.

Es ist eine Aufgabe der vorliegenden Erfindung, eine Trennvorrichtung anzugeben, die mittels eines Schneidstrahls ein präzises und rationelles Trennen einer Materialschicht ermöglicht.

Eine Trennvorrichtung, die diese Aufgabe löst, ist im Anspruch 1 angegeben. Die weiteren Ansprüche geben bevorzugte Ausführungen sowie eine Verwendung der Trennvorrichtung an.

Die erfindungsgemässe Trennvorrichtung umfasst ein Gelenk mit sphärischen Flächen zur schwenkbaren Anordnung des Schneidkopfes, eine Antriebseinrichtung zum Schwenken des Schneidkopfes und einen Taster zum Erfassen des Abstandes zwischen Schneidkopf und Oberfläche der Materialschicht.

Die erfindungsgemässe Trennvorrichtung erlaubt es, eine Materialschicht mittels des Schneidstrahls präzise und rationell zu trennen.

Weitere Konstruktionsmerkmale und deren Vorteile sind aus folgender Beschreibung und Zeichnungen von Ausführungsbeispielen ersichtlich. Es zeigen
Fig. 1 eine perspektivische Ansicht einer erfindungsgemässen Trennvorrichtung;
Fig. 2 die Vorrichtung gemäss Fig. 1 mit weiteren Komponenten zur Wasserzufuhr sowie zur Wegmessung;
Fig. 3 die Vorrichtung gemäss Fig. 2 in einer Draufsicht;
Fig. 4 den in Gelenken gelagerte Schneidkopf der Vorrichtung gemäss Fig. 1 in einer Seitenansicht;
Fig. 5 eine perspektivische Ansicht des unteren Teils des Schneidkopfes gemäss Fig. 4 im geschwenkten Zustand;
Fig. 6 einen Längsschnitt des Schneidkopfes gemäss Fig. 5 zusammen mit einem Werkstück;
Fig. 7 einen Längsschnitt des Schneidkopfes gemäss Fig. 4;
Fig. 8 einen Längsschnitt des Schneidkopfes gemäss Fig. 4 im geschwenkten Zustand;
Fig. 9 eine Detailansicht aus Fig. 7 zusammen mit einem Werkstück;
Fig. 10 die Detailansicht gemäss Fig. 9 im geschwenkten Zustand;
Fig. 11 eine perspektivische Ansicht einer zweiten Ausführungsform der Schneidkopflagerung für eine erfindungsgemässen Trennvorrichtung;
Fig. 12 einen Längsschnitt des Schneidkopfes der Trennvorrichtung gemäss Fig. 9 im aufgerichteten Zustand;
Fig. 13 den Längsschnitt des Schneidkopfes gemäss Fig. 12 im geschwenkten Zustand;
Fig. 14 eine geschnittene Seitenansicht einer Materialschicht, welche mit der Vorrichtung gemäss Fig. 1 getrennt wird; und
Fig. 15a-15c schematisch die Verläufe eines Wasserstrahls beim Durchtrennen einer Materialschicht bei drei verschiedenen Vorschubgeschwindigkeiten eines Schneidkopfes, wenn dieser aufgerichtet ist.

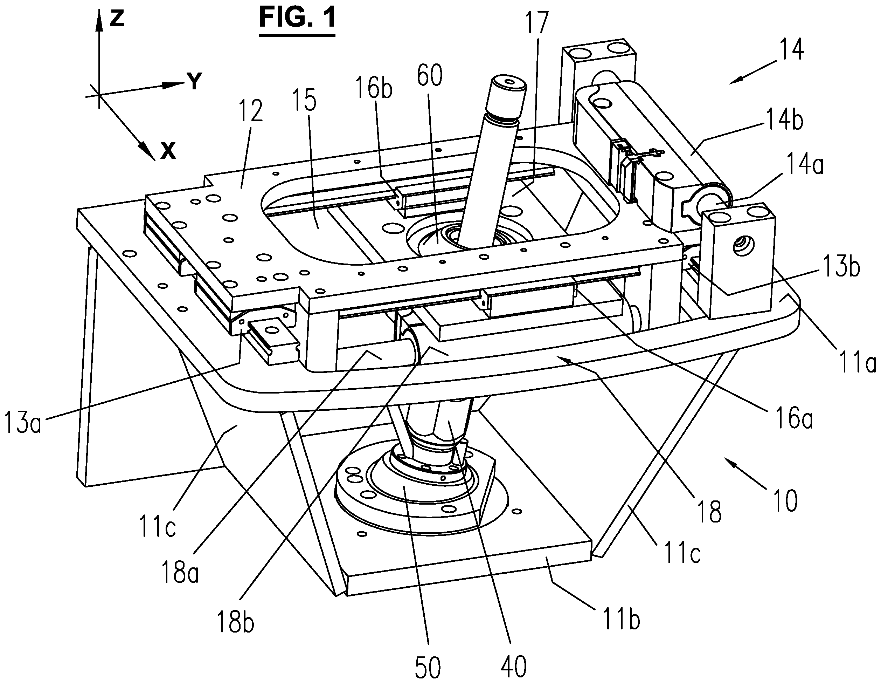

Wie aus Fig. 1 ersichtlich, umfasst die Trennvorrichtung zum Trennen einer Materialschicht eine Trägereinrichtung 10, an welcher ein Schneidkopf 40 schwenkbar gelagert ist. Im vorliegenden Beispiel ist der Schneidkopf 40 zur Bildung eines Wasserabrasivstrahls geeignet, der bei der Bearbeitung am auslassseitigen Ende des Schneidkopfes 40 austritt.

Die Trägereinrichtung 10 weist eine obere Trägerplatte 11a auf, auf welcher ein erster Schlitten 12 in X-Richtung hin und her verfahrbar angeordnet ist. An den beiden Querseiten des Schlittens 12 befinden sich erste Führungen 13a, 13b, welche beim Verfahren eine genaue lineare Bewegungsbahn vorgeben. Auf der oberen Trägerplatte 11a ist weiter ein erster Antrieb 14 angeordnet, der zum gesteuerten Verschieben des ersten Schlittens 12 dient.

Der erste Schlitten 12 weist eine Ausnehmung 15 auf, durch welche das einlassseitige Ende des Schneidkopfes 40 hindurchragt. Weiter ist der erste Schlitten 12 mit zweiten Führungen 16a, 16b versehen, die quer zu den ersten Führungen 13a, 13b verlaufen und eine genaue lineare Bewegungsbahn für einen zweiten Schlitten 17 definieren. Dieser ist demnach in Y-Richtung hin und her verfahrbar am ersten Schlitten 12 angeordnet. Ein am ersten Schlitten 12 angebrachter zweiter Antrieb 18 dient zum gesteuerten Verschieben des zweiten Schlittens 17.

Die jeweilige Führung 13a, 13b, 16a, 16b ist beispielsweise in Form einer Linearführung mit Wälzkörpern, z. B. einer Kugelumlaufführung, oder in Form einer anderen geeigneten Linearführung ausgebildet. Als Antrieb 14, 18 ist z. B. ein Linearantrieb geeignet. Im vorliegenden Ausführungsbeispiel umfasst der erste Antrieb 14 eine an der oberen Trägerplatte 11a befestigte Linearachse 14a sowie ein am ersten Schlitten 12 befestigtes Antriebsgehäuse 14b. Entsprechend umfasst der zweite Antrieb 18 eine am ersten Schlitten 12 befestigte Linearachse 18a sowie ein am zweiten Schlitten 17 befestigtes Antriebsgehäuse 18b. Das jeweilige Antriebsgehäuse 14b, 18b ist in Bezug auf die Linearachse 14a bzw. 18a linear verschiebbar.

Insgesamt bilden die Komponenten 12-18 einen Kreuzschlitten mit einer Antriebseinrichtung.

Um beim Schneiden den Schneidstrahl aus der Ausgangslage, welche hier der Z-Achse entspricht, in X-Richtung, Y-Richtung oder in eine beliebige andere Richtung neigen zu können, sind Gelenkmittel 50, 60 vorgesehen, welche zum schwenkbaren Lagern des Schneidkopfes 40 dienen. Der maximale Winkel, um welchen der Schneidkopf schwenkbar ist, beträgt typischerweise mindestens 5 Grad und/oder höchstens 20 Grad.

Die Gelenkmittel umfassen ein erstes Gelenk 50, welches an einer unteren Trägerplatte 11b der Trägereinrichtung 10 gehalten ist, und ein zweites Gelenk 60, welches am zweiten Schlitten 17 gehalten ist. Die beiden Trägerplatten 11a und 11b sind beabstandet zueinander angeordnet und über Seitenelemente 11c miteinander fest verbunden.

Die Trägereinrichtung 10 ist zusammen mit den daran fest angebrachten bzw. schwenkbaren Teilen als Ganzes im Raum, d. h. in der X-, Y- und Z-Achse verfahrbar angeordnet. Dazu sind übliche Antriebe und Führungen vorgesehen (in den Figuren nicht dargestellt).

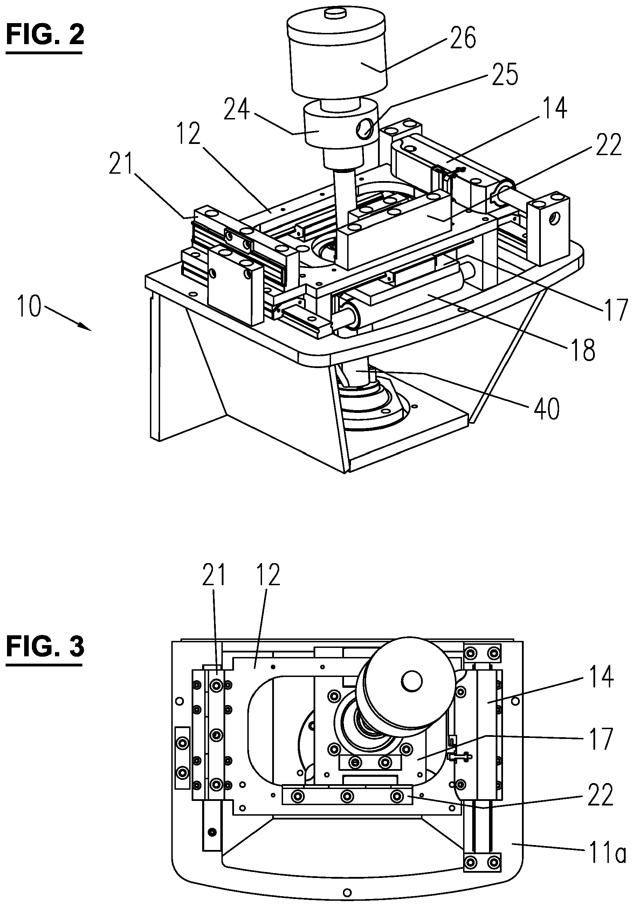

Wie Fig. 2 zeigt, befindet sich am einlassseitigen Ende des Schneidkopfes 40 ein Ventil 24 zum Ein- und Abschalten des Schneidstrahls. Das Ventil 24 weist einen Einlass 25 auf, durch welchen im Betrieb Wasser unter Hochdruck eingeleitet wird. Typischerweise werden Drücke bis zu 6000 bar oder mehr erzeugt. Zum Schalten des Ventils 24 dient eine darauf aufgesetzte Betätigungseinrichtung 26. Die Ankopplung der stationären Hochdruckleitung an den Einlass 25 erfolgt über übliche Komponenten, wie Hochdruckleitungsspiralen und Drehgelenke, welche das Schwenken des Schneidkopfes 40 relativ zur stationären Hochdruckleitung ermöglichen.

Wie nebst Fig. 2 auch Fig. 3 zeigt, sind im vorliegenden Ausführungsbeispiel externe Wegmesseinrichtungen 21, 22 vorgesehen, welche zur genauen Erfassung der aktuellen Position des Schlittens 12 bzw. 17 dienen und dadurch ein präzises Ansteuern der Antriebe 14, 18 erlauben, um die Schlitten 12, 17 genau positionieren zu können. Als Wegmesseinrichtung 21, 22 ist u. a. eine optoelektronische Wegmesseinrichtung geeignet, bei welcher Teilungen auf einem Massstabsystem, z. B. Glasmassstab, optisch erfasst und entsprechende elektrische Wegmesssignale erzeugt werden. Anstelle einer externen Wegmesseinrichtung 21, 22 ist es auch denkbar, einen Antrieb 14, 18 zu verwenden, in welchem ein Wegmesssystem bereits integriert ist.

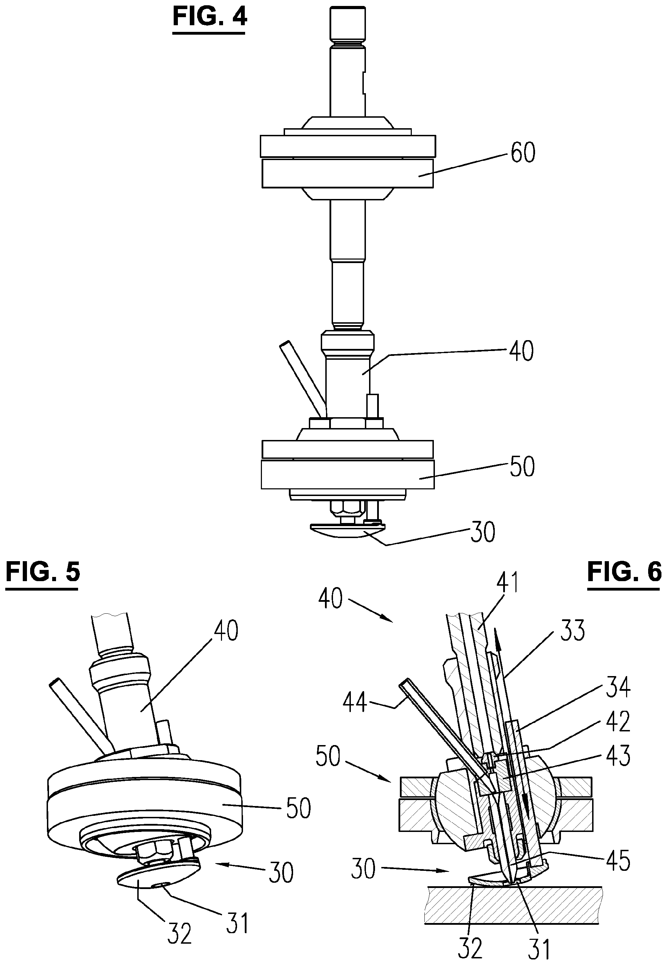

Wie Fig. 4 zeigt, befindet sich am auslassseitigen Ende des Schneidkopfes 40 ein mit diesem verbundener Taster 30. Schneidkopf 40 und Taster 30 sind zusammen schwenkbar, wie dies aus Fig. 5 ersichtlich ist. Schneidkopf 40 und Taster 30 sind somit im vorliegenden Ausführungsbeispiel so angeordnet, dass sie nicht relativ zueinander schwenkbar sind. Der Taster 30 weist eine Durchgangsöffnung 31 auf, welche von einer sphärischen Fläche 32 umgeben ist und durch welche der Schneidstrahl im Betrieb hindurchtritt.

Wie in Fig. 6 durch den Doppelpfeil 33 angedeutet, ist der Taster 30 in Richtung der Längsachse des Schneidkopfes 40 hin und her verschiebbar. Zu diesem Zweck ist der Kopf 31, 32 des Tasters 30 über mindestens eine verschiebbare Achse 34 an einen (in den Figuren nicht dargestellten) Tasterantrieb gekoppelt. Dieser Antrieb ist am Schneidkopf 40 gehalten und mit diesem zusammen schwenkbar.

In Fig. 6 sind auch die üblichen Teile des Schneidkopfes 40 zum Schneiden mittels Wasserabrasivstrahls ersichtlich: Kollimationsrohr 41 zur Leitung und Strömungsberuhigung des Wassers, Wasserdüse 42 zur Umwandlung der Druckenergie in Bewegungsenergie, Mischkammer 43, in welcher ein Einlassstutzen 44 mündet zur Zuführung von Abrasivmaterial, und Fokussierrohr 45 zur Beschleunigung des Abrasivmaterials sowie zum Ausrichten und Bündeln des Wasser-Abrasivgemisches. Die genaue Ausgestaltung des Schneidkopfes 40 richtet sich nach Auslegung der Trennvorrichtung. Beim reinen Wasserstrahlschneiden beispielsweise brauchen Mischkammer 43 und Einlassstutzen 44 nicht vorgesehen zu sein.

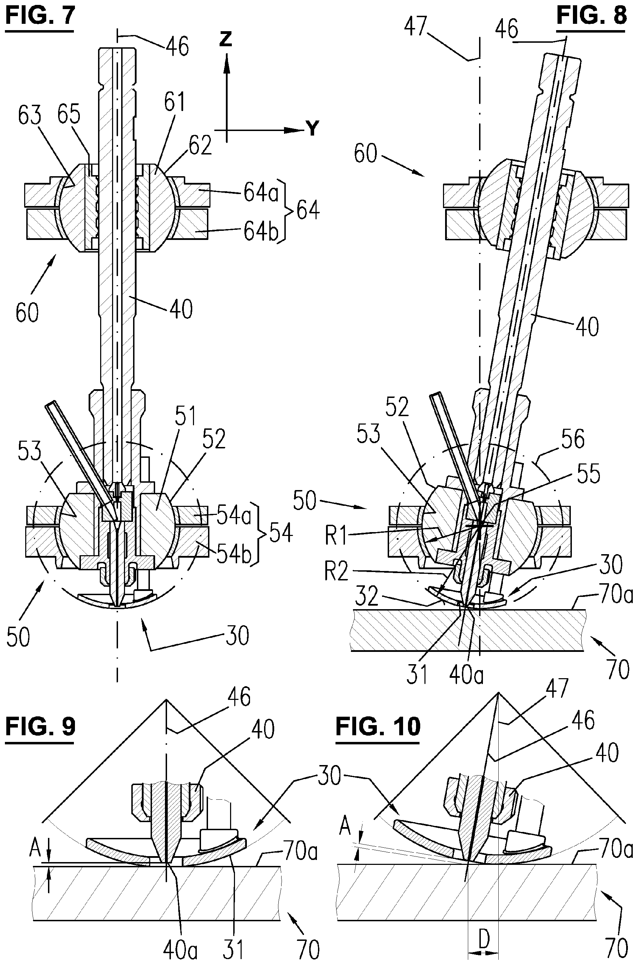

Fig. 7 zeigt genauer die Ausgestaltung der Gelenke 50 und 60 zur schwenkbaren Lagerung des Schneidkopfes 40 und des Tasters 30. Die Gelenke 50, 60 sind im Wesentlichen als Kugelgelenke ausgebildet.

Das erste Gelenk 50 weist einen ersten Kugelkörper 51 auf mit einer sphärischen Aussenfläche 52, die entlang einer sphärischen Innenfläche 53 einer ersten Halterung 54 gleiten kann. Der Schneidkopf 40 mit seinen Komponenten 41-45 und dem Tasterantrieb ist fest mit dem Kugelkörper 51 verbunden.

Die erste Halterung 54 weist einen oberen Haltering 54a sowie einen unteren Haltering 54b auf. Dieser ist lösbar mit dem oberen Haltering 54a verbunden. Diese Ausgestaltung erlaubt ein einfaches Auswechseln des Schneidkopfes 40, da er durch Lösen und Entfernen des unteren Halteringes 54b nach unten, d. h. in Richtung der negativen Z-Achse entfernt werden kann; ein Ausbau des zweiten Gelenkes 60 oder anderer auf der Trägereinrichtung 10 angeordneten Komponenten ist nicht unbedingt erforderlich.

Das zweite Gelenk 60 ist ähnlich wie das erste Gelenk 50 aufgebaut und umfasst einen zweiten Kugelkörper 61 mit sphärischer Aussenfläche 62 und eine zweite Halterung 64 mit sphärischer Innenfläche 63, wobei die zweite Halterung 64 sich aus einem oberen Haltering 64a und einem unteren Haltering 64b zusammensetzt. Beim ersten Gelenk 50 ist jedoch der Schneidkopf 40 fest mit dem ersten Kugelkörper 51 verbunden, während beim zweiten Gelenk 60 der Schneidkopf 40 fest mit einer Büchse 65 verbunden ist, die in einer Bohrung im zweiten Kugelkörper 61 aufgenommen ist und relativ zum diesem in Richtung der Schneidkopfachse 46 (Richtung, in welcher sich der Schneidstrahl ausbreitet) verschiebbar ist.

Das zweite Gelenk 60 ist demnach ein Kugelgelenk mit einer integrierten axialen Führung, wodurch beim Schwenken ein Ausgleich des Schneidkopfes 40 in Richtung der Schneidkopfachse 46 ermöglicht wird. In Fig. 8 ist eine mögliche Schwenkung dargestellt: Das zweite Gelenk 60 ist in Y-Richtung verschoben, wodurch der ganze Schneidkopf 40 zusammen mit dem Taster 30 um einen Winkel gegenüber der Vertikalen 47, welche im vorliegenden Beispiel der Z-Achse entspricht, geschwenkt ist. Das Schwenkzentrum ist durch den Mittelpunkt 55 der sphärischen Flächen 52, 53 gegeben und befindet sich somit innerhalb des ersten Gelenkes 50.

Die sphärische Innenfläche 53 des ersten Gelenkes 50 liegt auf der Oberfläche einer Kugel mit Radius R1 und die sphärische Fläche 32 des Tasters 30 liegt auf der Oberfläche einer Kugel mit Radius R2 (vgl. punktgestrichelte Kreislinie 56 in Fig. 8). Der Radius R2 ist grösser als der Radius R1 und so gewählt, dass dann, wenn der Taster 30 soweit ausgefahren wird, bis die Austrittsöffnung 40a des Schneidkopfes 40, aus welcher der Schneidstrahl beim Trennvorgang austritt, in der Durchgangsöffnung 31 des Tasters 30 zu liegen kommt, das Schwenkzentrum 55 mit dem Zentrum der Kugel mit Radius R2 zusammenfällt.

Die Geometrie des Schneidkopfes 40 ist so gewählt, dass das Schwenkzentrum 55 nahe an die Oberfläche 70a der Materialschicht 70 gebracht werden kann. Der minimale Abstand zwischen Schwenkzentrum 55 und Austrittsöffnung 40a des Schneidkopfes 40 ist typischerweise kleiner als das Dreifache von R1 und/oder kleiner als das Zweifache von R1.

Da das Schwenkzentrum 55 beabstandet zur Oberfläche 70a des Werkstückes 70 angeordnet ist, verschiebt sich bei einer Schwenkung des Schneidkopfes 40 die Position des Schneidpunktes (Schnittpunkt der Schneidkopfachse 46 mit der Materialoberfläche 70a). Dies ist aus den Figuren 9 und 10 ersichtlich. In Fig. 10 ist eine seitliche Verschiebung D eingezeichnet. Durch entsprechendes Verschieben des Schneidkopfes 40 im Betrieb, kann diese Verschiebung D ausgeglichen werden.

In Fig. 9 ist der Abstand zwischen Austrittsöffnung 40a und Oberfläche 70a mit A bezeichnet. Beim Schwenken des Schneidkopfes 40 ändert sich ebenfalls der Abstand A. Diese Änderung ist in der Regel klein, für sehr genaues Schneiden ist sie jedoch ebenfalls ausgleichbar, indem der Schneidkopf 40 in der Z-Achse so nachgeführt wird, dass der Abstand A gleich bleibt (vgl. Fig. 10). Der Taster 30, falls er während des Schwenkens auf der Oberfläche 70a aufliegt, wird dabei entsprechend relativ zum Schneidkopf 40 verschoben.

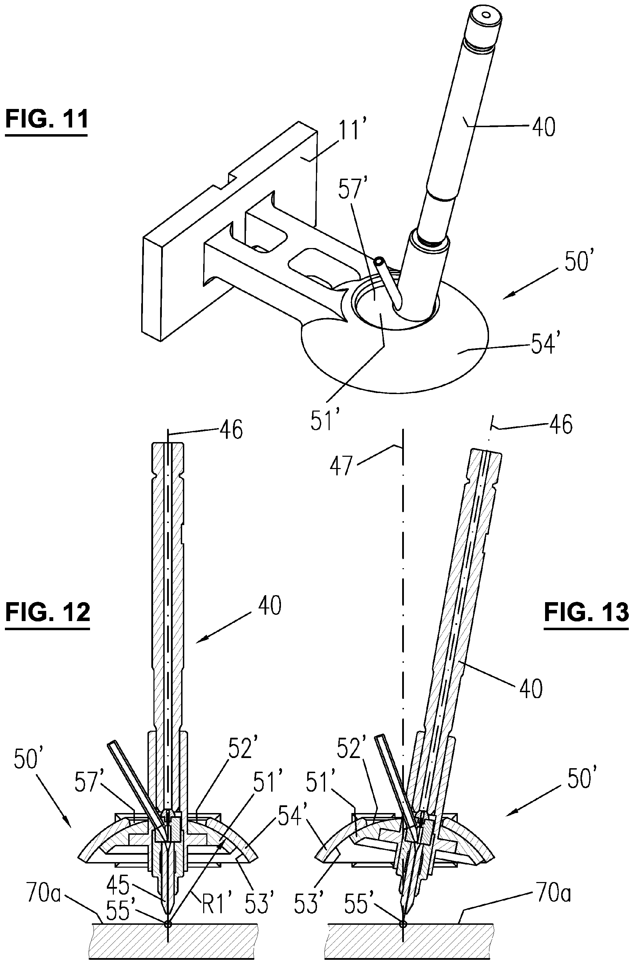

In den Figuren 11 bis 13 ist eine zweite Ausführungsform des ersten Gelenkes 50' zur Lagerung des Schneidkopfes 40 gezeigt. Dieser ist an einem Gelenkteil 51' befestigt, welches eine sphärische Aussenfläche 52' aufweist. Die Gegenfläche zur Bildung des Gelenkes 50' ist durch die Innenfläche 53' gegeben, welche Teil eines als Kugelpfanne dienender Schalenkörpers 54' ist. Dieser ist seitlich an einer Halteplatte 11' befestigt und oben mit einer Durchgangsöffnung 57' versehen, durch welche der Schneidkopf 40 hindurchragt.

Die sphärische Innenfläche 53' liegt auf der Oberfläche einer Kugel mit Radius R1' und Schwenkzentrum 55'. Im vorliegenden Ausführungsbeispiel fallen das Schwenkzentrum 55' und der Schneidpunkt zusammen. Beim Trennvorgang kann das Schwenkzentrum 55' und somit der Schneidpunkt so angeordnet werden, dass es bzw. er auf der Werkstücksoberfläche 70a liegt.

Zur Erfassung des Abstandes zwischen Schneidkopf 40 und Werkstücksoberfläche 70a dient ein Taster, der zur besseren Übersicht in Figuren 11 bis 13 nicht gezeigt ist und der so wie der Taster 30 gemäss Fig. 6 ausgebildet und mittels eines Tasterantriebs verschiebbar am Schneidkopf 40 gehalten ist. Auch die restlichen Komponenten zur Bildung einer Trennvorrichtung, insbesondere die Schlitten 12, 17 und das zweite Gelenk 60 sind so ausgestaltet wie bei der ersten Ausführungsform gemäss Fig. 1.

Beim Betrieb der soweit dargestellten Trennvorrichtungen erzeugt die Einrichtung aus den Antrieben 14, 18 Längsbewegungen in X- und Y-Richtung, welche von den Führungen 13a, 13b, 16a, 16b aufgenommen und über die Schlitten 12, 17 und Gelenke 50 bzw. 50' und 60 auf den Schneidkopf 40 übertragen werden. Der Schneidkopf 40 wird dadurch um das Schwenkzentrum 55 bzw. 55' geschwenkt.

Die verschiedenen Bewegungen, wie das Verfahren der Trägereinrichtung 10 als Ganzes im Raum, die Schwenkung des Schneidkopfes 40 relativ zur Trägereinrichtung 10 um das Schwenkzentrum 55, 55' und das Verfahren des Tasters 30 in Richtung 33, erfolgen gesteuert mittels einer (in den Figuren nicht dargestellten) Steuerung, z. B. einer CNC-Steuerung.

Aufgrund der Schwenkbarkeit des Schneidkopfes 40 können Form- und Winkelfehler behoben oder zumindest reduziert werden. Das Beispiel in Fig. 14 zeigt schematisch das Trennen einer Materialschicht 70 mittels eines Wasserstrahls 40b, welcher aus der Austrittsöffnung 40a des Schneidkopfes 40 austritt. Zur besseren Übersicht ist in Fig. 14 der Taster 30 nicht gezeigt. Beim Schneiden entstehen zwei Wände in der Materialschicht 70, welche die Schnittkante 70c des Teils mit der gewünschten Form ("Nutzteil") und die Schnittkante 70b des als Abfall anfallenden Teils ("Abfallteil") bilden.

Im vorliegenden Beispiel ist die Schneidkopfachse 46 so um einen Schwenkwinkel gegenüber der Z-Achse geneigt, dass beim Schneiden eine Schnittkante 70c am Nutzteil entsteht, die senkrecht zur Oberfläche 70a der Materialschicht 70 steht. Die andere Schnittkante 70b am Abfallteil ist um den Schwenkwinkel mehr als üblich abgeschrägt, was aber keine Rolle spielt, da dieses Teil nicht weiter verwendet wird.

Fig. 14 ist lediglich ein Beispiel. Je nach Anwendungszweck kann die Schnittkante 70c auch anders gelegt sein. Im Weiteren kann, da der Schneidkopf 40 in eine beliebige Richtung schwenkbar ist, nebst dem Winkelfehler auch der Formfehler zumindest stark reduziert werden.

Zur Festlegung des Schwenkwinkels, um den der Schneidkopf 40 zu schwenken ist, weist die Steuerung einen Computer auf, welcher mit einem geeigneten Programm versehen ist. Dieses ist z. B. so ausgestaltet, dass es anhand eines mathematischen Modells die zu erwartenden Winkel- und Formfehler berechnet und den Schwenkwinkel bestimmt, um diese Fehler zu korrigieren. Die Berechnung erfolgt dabei ausgehend von verschiedenen Parametern, welche der Benutzer festlegt und welche u. a. die zu bearbeitende Materialschicht wie Art und Dicke des Materials charakterisieren.

Bei der Lagerung gemäss Figuren 4 bis 8 befindet sich das Schwenkzentrum 55 beabstandet zur Oberfläche 70a. Bei einer Schwenkung des Schneidkopfes 40 verschiebt sich daher die Position des Schneidpunktes. Um einen präzisen Schnitt entlang der gewünschten Kontur zu gewährleisten, werden die X-, Y- und Z-Achse nachgeführt. Dazu kann das oben erwähnte Programm so eingerichtet sein, dass es nebst dem Schwenkwinkel auch die entsprechende Korrektur in den Achsen berechnet, und so mittels der Steuerung Steuersignale erzeugt werden, welche eine entsprechende Nachführung des Schneidkopfes 40 bewirken.

Zur Bestimmung der Korrekturparameter, welche die Nachführung in der X- und Y-Achse definieren, um eine bestimmte Materialschicht zu schneiden, kann beispielsweise eine Eichung durchgeführt werden. Dazu wird ein Probestück der Materialschicht geschnitten, indem der Schwenkkopf 40, um den maximalen Schwenkwinkel schräggestellt und um die Z-Achse herum geschwenkt wird, so dass der Schneidstrahl einen Konus aus dem Probestück herausschneidet. Aus den Abmessungen dieses Konus lassen sich die Korrekturparameter für die Nachführung in der X- und Y-Achse bestimmen. Diese Parameter werden z. B. vom Benutzer in den Computer der Steuerung eingegeben, so dass diese beim Schneiden der eigentlichen Materialschicht die jeweils erforderliche Nachführung berechnen und einleiten kann.

Nebst dem Schwenken kann eine Korrektur in der Z-Achse z. B. auch dann nötig sein, wenn die Materialschicht eine unebene Oberfläche aufweist und/oder nicht plan aufliegt. Mittels des Tasters 30 können Abweichungen in vertikaler Richtung erfasst und kompensiert werden. Der an den Taster 30 gekoppelte Tasterantrieb ist auch kraftgesteuert antreibbar, um den Taster 30 mit einer bestimmten, vorgebbaren Kraft zu verschieben.

Der Taster 30 ist wahlweise getaktet, kontinuierlich oder vorgespannt einsetzbar:
- Beim getakteten Modus wird in vorbestimmten Zeitintervallen der Taster 30 auf die Materialoberfläche 70a aufgesetzt zur aktuellen Erfassung des Abstandes, damit, falls erforderlich, eine Korrektur des Schneidkopfes 40 vorgenommen werden kann.
- Beim kontinuierlichen Modus bleibt der Taster 30 während des kompletten Schneidvorganges auf der Materialoberfläche 70a, wobei auftretende Abweichungen an die Steuerung gemeldet werden, die eine entsprechende Korrektur bewirkt. Dabei bleibt der Taster 30 aufgrund seiner sphärischen Fläche 32 mit der Materialoberfläche 70a immerzu in Kontakt, auch wenn der Schneidkopf 40 geschwenkt wird.
- Vorgespannter Modus bedeutet, dass der Taster 30 mit einer vordefinierten Kraft auf das Material wirkt, um so einen konstanten Abstand zu gewährleisten.

Ein möglicher Ablauf bei der Verwendung des Tasters 30 im getakteten oder kontinuierlichen Modus ist wie folgt:
- Referenzierung des Tasters:
   Der Schneidkopf 40 befindet sich in der Null-Grad-Auslenkung, d. h. die Schneidkopfachse 46 verläuft senkrecht zur Materialoberfläche 70a, wobei diese vom Taster 30 kontaktiert wird. Der aktuelle Abstand zwischen der Austrittsöffnung 40a des Schneidkopfes 40 und der Tasteroberfläche 32, die tangential an der Materialoberfläche 70a anliegt, wird erfasst und definiert den Ist-Abstand.
- Der Schneidkopf 40 wird in den Soll-Abstand A gebracht, welcher der Steuerung bekannt ist und/oder vorgängig eingegeben wurde.
- Während dem Abarbeiten des Schneidprogramms wird der Abstand zwischen Austrittsöffnung 40a und
   Materialoberfläche 70a (getaktet oder kontinuierlich) bestimmt. Entspricht der Abstand nicht dem Soll-Abstand A, so wird der Schneidkopf 40 entsprechend nachgeführt, hier durch Verschiebung in der Z-Achse.
- Werden Schneidkopf 40 und Taster 30 geschwenkt, so entfernt sich beim ersten Ausführungsbeispiel gemäss Fig. 1 der Schneidpunkt von der Sollkontur, entlang welcher das Werkstückes 70 getrennt werden soll (vgl. Distanz D in Fig. 10). Die Steuerung liefert Steuersignale, welche einen Ausgleich der Verschiebung D von der Sollkontur bewirken. Die Steuersignale sind wie weiter oben erläutert z. B. mit Hilfe eines mathematischen Modells berechenbar. Im Weiteren sind mit der Steuerung ebenfalls Steuersignale erzeugbar, welche bewirken, dass der Abstand A zwischen Austrittsöffnung 40a und Materialoberfläche 70a konstant bleibt (vgl. Abstand A in Fig. 9 und 10).

Ein möglicher Ablauf bei der Verwendung des Tasters 30 im vorgespannten Modus ist wie folgt:
- Die Referenzierung des Tasters 30 erfolgt wie oben beim getakteten bzw. kontinuierlichen Modus beschrieben.
- Im Schneidbetrieb wirkt der Taster 30 mit einer vorbestimmten Kraft auf das zu bearbeitende Material 70. Damit der Abstand A zwischen Materialoberfläche 70a und der Austrittsöffnung 40a konstant bleibt, wird der Schneidkopf 40 wie oben beschrieben in der Achse nachgeführt.
- Die Steuerung ist so eingerichtet, dass der Benutzer auswählen kann, ob der Taster 30 permanent oder nur in gewünschten Passagen (z. B. auf langen Geraden) mit der vorgewählten Kraft auf das Material 70 drückt. Im letzteren Fall wird der Taster 30 in den übrigen Passagen, insbesondere in engen, die z. B. bei vielen Richtungsänderungen auf engem Raum auftreten, im getakteten oder kontinuierlichen Modus oder gar nicht eingesetzt wird.

Der vorgespannte Modus ist u. a. bei der Bearbeitung einer dünnen Materialschicht einsetzbar, z. B. eines Bleches mit einer Dicke im Bereich von 1 mm. Durch das Andrücken des Tasters an die Materialoberfläche wird erreicht, dass die Materialschicht plan aufliegt. Auch bei anderen Werkstücken kann der vorgespannte Modus vorteilhaft sein, indem die durch den Taster 30 erzeugte Anpresskraft ein etwaiges Schwingen des Werkstückes verhindert und so der Schneidpunkt präzise an der gewünschten Stelle auf der Werkstücksoberfläche positionierbar ist.

Damit der Schneidkopf 40 beim Anfahren aus dem Stillstand in Bewegung gerät, ist ein gewisses Moment zu überwinden ("Losfahrmoment"). Beispielsweise wird ein gewisses Moment benötigt, um die ruhenden Kugelkörper 51, 61 der Gelenke 50, 60 zu drehen. Zur Vermeidung derartiger Losfahrmomente ist die Steuerung in einer Weiterführung so ausgebildet, dass beim Schneidvorgang der Schwenkkopf 40 laufend bewegt wird. Beispielsweise wird der Schwenkkopf 40, wenn entlang einer in X-Richtung verlaufenden geraden Linie geschnitten wird, in dieser Richtung hin und her geschwenkt, so dass er ständig in Bewegung bleibt.

Soweit nicht schon erwähnt, haben die hier beschriebene Trennvorrichtungen und die damit verbundenen Möglichkeiten zur Kompensation des Winkel- und Formfehlers mannigfache Vorteile:
- Es kann eine höhere Vorschubgeschwindigkeit gewählt werden, ohne dass dabei die Qualität der Schnittkanten leidet. Die Bearbeitung wird dadurch rationeller.
- Der "taper" an den Schnittkanten kann eliminiert werden, so dass eine aufwendige Nachbearbeitung entfällt.
- Werkstücke können sehr präzise hergestellt werden. Selbst Werkstücke mit besonders grosser Dicke und/oder mit komplizierter Kontur sind mit einer hohen Genauigkeit in Bezug auf die Kontur sowie auf die gewünschte Abmessung herstellbar.
- Innenecken lassen sich mit einer deutlich höheren Qualität herstellen, als dies mit den üblichen Trennvorrichtungen möglich ist.

Aus der vorangehenden Beschreibung sind dem Fachmann zahlreiche Abwandlungen zugänglich, ohne den Schutzbereich der Erfindung zu verlassen, der durch die Ansprüche definiert ist.

So können die hier beschriebenen Massnahmen für diverse Arten von Trennen mittels Schneidstrahl angewendet werden, insbesondere Schneiden mittels Flüssigkeit wie Reinwasserschneiden oder Abrasivschneiden, Laserschneiden, Plasmaschneiden, etc.

## Patentansprüche

1. Trennvorrichtung zum Trennen einer Materialschicht (70) mittels eines Schneidstrahls (40b), umfassend
einen Schneidkopf (40), aus welchem beim Trennvorgang der Schneidstrahl (40b) austritt,
ein Gelenk (50, 50') mit sphärischen Flächen (52, 53; 52,' 53') zur schwenkbaren Anordnung des Schneidkopfes (40), und
eine Antriebseinrichtung (14, 18) zum Schwenken des Schneidkopfes (40), **gekennzeichnet durch** einen Taster (30) zum Erfassen des Abstandes zwischen Schneidkopf (40) und Oberfläche (70a) der Materialschicht (70), wobei der Taster (30) am Schneidkopf (40) gehalten ist, so dass beide zusammen schwenkbar sind, und eine gekrümmte Fläche (32) aufweist, welche auf der Materialschicht (70) aufsetzbar ist.

2. Vorrichtung nach Anspruch 1, wobei die gekrümmte Fläche (32) sphärisch ist.

3. Vorrichtung nach einem der vorangehenden Ansprüche, wobei der Taster (30) an einen Tasterantrieb gekoppelt ist, mittels welchem der Taster in Längsrichtung des Schneidkopfes (40) verschiebbar (33) und/oder mit einer einstellbaren Kraft gegen die Oberfläche (70a) der Materialschicht (70) drückbar ist.

4. Vorrichtung nach einem der vorangehenden Ansprüche, wobei der Taster (30) eine Durchgangsöffnung (31) für den Durchtritt des Schneidstrahls (40b) aufweist.

5. Vorrichtung nach einem der vorangehenden Ansprüche, die ein weiteres, zweites Gelenk (60) mit sphärischen Flächen (62, 63) umfasst, welches beabstandet zum ersten Gelenk (50; 50') angeordnet ist.

6. Vorrichtung nach Anspruch 5, wobei das zweite Gelenk (60) in Bezug auf das erste Gelenk (50; 50') in einer Ebene (X, Y) verschiebbar ist.

7. Vorrichtung nach einem der Ansprüche 5 bis 6, wobei das zweite Gelenk (60) ein axiale Führung aufweist, welche vorzugsweise eine Büchse (65) aufweist, die in Bezug auf einen Kugelkörper (61) des zweiten Gelenkes (60)verschiebbar ist.

8. Vorrichtung nach einem der Ansprüche 5 bis 7, wobei das zweite Gelenk (60) an einem Kreuzschlitten (12, 17) gehalten ist.

9. Vorrichtung nach einem der vorangehenden Ansprüche, wobei die Antriebseinrichtung mindestens einen Linearantrieb (14, 18) aufweist.

10. Vorrichtung nach Anspruch 9, mit einer Wegmesseinrichtung (21, 22) zum Bestimmen der Position der Linearachse (14a, 18a) des Linearantriebs (14, 18), wobei die Wegmesseinrichtung (21, 22) ausserhalb des Linearantriebs (14, 18) angeordnet ist.

11. Vorrichtung nach einem der vorangehenden Ansprüche, mit einer Steuerung, welche so eingerichtet ist, dass beim Trennen entlang einer geraden Trennlinie, der Schneidkopf (40) im Wesentlichen in Richtung der Trennlinie hin und her geschwenkt wird.

12. Vorrichtung nach einem der vorangehenden Ansprüche, wobei der Schneidkopf (40) um einen maximalen Winkel aus einer Ausgangslage (47) schwenkbar ist, der mindestens 5 Grad und/oder höchstens 20 Grad beträgt.

13. Vorrichtung nach einem der vorangehenden Ansprüche, wobei der Schneidstrahl (40b) gebildet ist aus einer Flüssigkeit mit oder ohne Abrasivteilchen, Gas und/oder Photonen.

14. Verwendung einer Trennvorrichtung nach einem der vorangehenden Ansprüche zum Trennen einer Materialschicht.

## Claims

1. Separating device for separating a material layer (70) by means of a cutting jet (40b), comprising
a cutting head (40) from which the cutting jet (40b) is emitted during the separating process,
an articulation (50, 50') having spherical surfaces (52, 53; 52,' 53') for arranging the cutting head (40) in a pivoting manner, and
a drive device (14, 18) for pivoting the cutting head (40), **characterised by** a probe (30) for detecting the distance between the cutting head (40) and the surface (70a) of the material layer (70), the probe (30) being retained on the cutting head (40) in such a manner that both are jointly pivotable and having a curved surface (32) that can be set down onto the material layer (70).

2. Device according to claim 1, wherein the curved surface (32) is spherical.

3. Device according to one of the preceding claims, wherein the probe (30) is coupled to a probe actuator by means of which the probe is displaceable (33) in the longitudinal direction of the cutting head (40) and/or can be pressed against the surface (70a) of the material layer (70) with an adjustable force.

4. Device according to one of the preceding claims, wherein the probe (30) has an opening (31) for the passage of the cutting jet (40b).

5. Device according to one of the preceding claims, which comprises another, second articulation (60) having spherical surfaces (62, 63) and being arranged at a distance from the first articulation (50; 50').

6. Device according to claim 5, wherein the second articulation (60) is displaceable relative to the first articulation (50; 50') in a plane (X, Y).

7. Device according to one of claims 5 to 6, wherein the second articulation (60) has an axial guide that is preferably provided with a bushing (65) which is displaceable relative to a spherical body (61) of the second articulation (60).

8. Device according to one of claims 5 to 7, wherein the second articulation (60) is retained on a compound slide (12, 17).

9. Device according to one of the preceding claims, wherein the drive device comprises at least one linear actuator (14, 18).

10. Device according to claim 9, comprising a path-measuring system (21, 22) for determining the position of the linear shaft (14a, 18a) of the linear actuator (14, 18), the path-measuring system (21, 22) being arranged outside the linear actuator (14, 18).

11. Device according to one of the preceding claims, comprising a control that is configured such that for separating along a straight separating line, the cutting head (40) is pivoted back and forth substantially in the direction of the separating line.

12. Device according to one of the preceding claims, wherein the cutting head (40) is pivotable from an initial position (47) over a maximum angle of at least 5 degrees and/or at most 20 degrees.

13. Device according to one of the preceding claims, wherein the cutting jet (40b) is formed of a liquid with or without abrasive particles, of gas, and/or of photons.

14. Use of a cutting device according to one of the preceding claims for separating a material layer.

## Revendications

1. Dispositif de découpe permettant de séparer une couche de matériau (70) au moyen d'un jet de coupe (40b), comprenant
une tête de coupe (40) de laquelle le jet de coupe (40b) est émis au cours du processus de séparation,
une articulation (50, 50') comprenant des surfaces sphériques (52, 53; 52,' 53'), permettant l'agencement pivotant de la tête de coupe (40), et
un dispositif d'entraînement (14, 18) pour pivoter la tête de coupe (40), **caractérisé par** un palpeur (30) afin de détecter la distance entre la tête de coupe (40) et la surface (70a) de la couche de matériau (70), le palpeur (30) étant retenu sur la tête de coupe (40) de telle manière que les deux peuvent pivoter ensemble et présentant une surface (32) courbée qui peut être posée sur la couche de matériau (70) .

2. Dispositif selon la revendication 1, où la surface (32) courbée est sphérique.

3. Dispositif selon l'une des revendications précédentes, où le palpeur (30) est accouplé à un actionneur de palpeur qui permet de déplacer (33) le palpeur en direction longitudinale de la tête de coupe (40) et/ou de le presser contre la surface (70a) de la couche de matériau (70) avec une force réglable.

4. Dispositif selon l'une des revendications précédentes, où le palpeur (30) présente une ouverture (31) pour le passage du jet de coupe (40b).

5. Dispositif selon l'une des revendications précédentes, lequel comprend une deuxième articulation (60) supplémentaire comprenant des surfaces sphériques (62, 63) qui est agencée à une distance de la première articulation (50; 50').

6. Dispositif selon la revendication 5, où la deuxième articulation (60) est déplaçable par rapport à la première articulation (50; 50') dans un plan (X, Y).

7. Dispositif selon l'une des revendications 5 à 6, où la deuxième articulation (60) présente un guidage axial qui comprend préférablement une douille (65) laquelle est déplaçable par rapport à un corps sphérique (61) de la deuxième articulation (60).

8. Dispositif selon l'une des revendications 5 à 7, où la deuxième articulation (60) est retenue sur un chariot croisé (12, 17).

9. Dispositif selon l'une des revendications précédentes, où ledit dispositif d'entraînement comprend au moins un actionneur linéaire (14, 18).

10. Dispositif selon la revendication 9, comprenant un système de mesure de déplacement (21, 22) permettant de déterminer la position de l'axe linéaire (14a, 18a) de l'actionneur linéaire (14, 18), ledit système de mesure de déplacement (21, 22) étant agencé à l'extérieur de l'actionneur linéaire (14, 18).

11. Dispositif selon l'une des revendications précédentes, comprenant une commande agencée de telle manière que lors de la séparation le long d'une ligne de séparation droite, la tête de coupe (40) est pivotée en va-et-vient substantiellement dans la direction de la ligne de séparation.

12. Dispositif selon l'une des revendications précédentes, où la tête de coupe (40) peut pivoter à partir d'une position de départ (47) sur un angle maximal d'au moins 5 degrés et/ou ne dépassant pas 20 degrés.

13. Dispositif selon l'une des revendications précédentes, où le jet de coupe (40b) est formé d'un liquide comprenant ou non des particules abrasives, d'un gaz et/ou de photons.

14. Utilisation du dispositif de découpe selon l'une des revendications précédentes pour séparer une couche de matériau.
